(19) Europäisches Patentamt
European Patent Office
Office européen des brevets

(11) **EP 3 796 686 B1**

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **19198983.9**

(22) Anmeldetag: **23.09.2019**

(51) Internationale Patentklassifikation (IPC):
**H04W 4/02** *(2018.01)* **H04W 4/46** *(2018.01)*

(52) Gemeinsame Patentklassifikation (CPC):
**H04W 4/46; H04W 4/023**

(54) **VERFAHREN, VORRICHTUNGEN UND COMPUTERPROGRAM ZUM VERIFIZIEREN DER POSITION EINES FAHRZEUGS**

METHOD, DEVICES AND COMPUTER PROGRAM FOR VERIFYING THE POSITION OF A VEHICLE

PROCÉDÉS, DISPOSITIFS ET PROGRAMME INFORMATIQUE POUR VÉRIFIER LA POSITION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.03.2021 Patentblatt 2021/12**

(73) Patentinhaber: **Volkswagen AG**
**38440 Wolfsburg (DE)**

(72) Erfinder:
• **Göricke, Bastian**
**38446 Wolfsburg (DE)**
• **Klomp, Sven**
**31311 Uetze / Dollbergen (DE)**

(56) Entgegenhaltungen:
**CN-A- 106 851 544 US-A1- 2017 365 171**

• **BIN XIAO ET AL: "Detection and localization of sybil nodes in VANETs", DEPENDABILITY ISSUES IN WIRELESS AD HOC NETWORKS AND SENSOR NETWORKS, ACM, 2 PENN PLAZA, SUITE 701 NEW YORK NY 10121-0701 USA, 26. September 2006 (2006-09-26), Seiten 1-8, XP058302722, DOI: 10.1145/1160972.1160974 ISBN: 978-1-59593-471-0**
• **RENAULT SAS: "Draft - DTR/ITS-00539 v0.0.9 (TR 103 460 ) Misbehavior behavior detection", ETSI DRAFT; ITSWG5(19)000028, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. WG ITS WG5 Security, Nr. .0.9 23. Mai 2019 (2019-05-23), Seiten 1-27, XP014343122, Gefunden im Internet: URL:docbox.etsi.org/ITS/ITSWG5/05-CONTRIBU TIONS/2019/ITSWG5(19)000028_Draft_-_DTR_IT S-00539_v0_0_9__TR_103_460___Misbehavior_ b ehav/ITS-00539v009.docx [gefunden am 2019-05-23]**

EP 3 796 686 B1

**Beschreibung**

Die vorliegende Erfindung bezieht sich auf Verfahren, Vorrichtungen und Computerprogramme für ein Fahrzeug und für einen Server.

Die Kommunikation zwischen Fahrzeugen, die sogenannte Fahrzeug-zu-Fahrzeug-Kommunikation, ist ein Schwerpunkt automobiler Forschung. Ein Aspekt ist dabei die Verlässlichkeit der Kommunikation zwischen den Fahrzeugen. Da die Kommunikation drahtlos erfolgt ist einerseits zu berücksichtigen, dass eine Nachrichtenübertragung möglicherweise nicht zuverlässig ist, weil die Nachrichten fehlerhaft übertragen werden. Andererseits ist darauf zu achten, dass die empfangenen Nachrichten auch von vertrauenswürdigen Kommunikationspartnern stammen.

Die deutsche Patentanmeldung DE 10 2016 205 143 A1 offenbart einen Ansatz, in dem Übertragungsparameter einer Fahrzeug-zu-Fahrzeug-Kommunikation basierend auf einer Position des Fahrzeugs angepasst werden. Hierbei wird jedoch lediglich einer fehlerhaften Übertragung der Nachrichten entgegengewirkt und nicht die Vertrauenswürdigkeit der Kommunikationspartner überprüft.

BIN XIAO ET AL: "Detection and localization of sybil nodes in VANETS" (2006) befasst sich mit der Detektion und Lokalisierung von Knoten in Fahrzeugnetzwerken. Dabei übermitteln sogenannte Behaupter-Fahrzeuge in regelmäßigen Abständen Beacon-Nachrichten, welche die Identität und Position des Fahrzeugs umfassen. Sogenannte Zeugen-Fahrzeuge empfangen die Beacon-Nachricht und messen die Signalstärke der Beacon-Nachricht. Die gemessenen Signalstärken der Beacon-Nachricht des Behaupter-Fahrzeugs werden den Beacon-Nachrichten der Zeugen-Fahrzeuge angehängt. Ein Überprüfer-Fahrzeug nutzt diese an die Beacon-Nachrichten der Zeugen-Fahrzeuge angehängten Signalstärke-Messungen, um darüber die Position des Behaupter-Fahrzeugs zu schätzen, und vergleicht diese mit der Position, die in der Beacon-Nachricht des Behaupter-Fahrzeugs enthalten ist.

In CN 106 851 544 A wird ein weniger komplexer Ansatz gewählt, in dem eine RSSI und die behauptete Position verglichen werden. Basierend auf dem Vergleich wird bestimmt, ob dem sendenden Knoten vertraut werden kann. Auch in dem Entwurf 0.0.9 des Berichts zu ETSI TR 103 460 wird das Verhältnis aus Distanz und RSSI genutzt, um eine Plausibilität einer Nachricht zu überprüfen.

In US 2017/365171 A1 wird offenbart, wie eine gemessene RSSI mit einer erwartete RSSI, welche mit einem dynamischen Modell berechnet wird, verglichen.

In US2017/365171A1 wird offenbart, wie eine gemessene RSSI mit einer erwarteten RSSI, welche mit einem dynamischen Modell berechnet wird, verglichen wird.

Es besteht daher weiterhin ein Bedarf, ein Übertragungskonzept für Fahrzeug-zu-Fahrzeugnachrichten bereitzustellen, bei der eine Verlässlichkeit der Kommunikation erhöht wird.

Diesem Bedarf wird durch den Gegenstand der unabhängigen Ansprüche entsprochen. Ausführungsbeispiele schaffen Verfahren, Vorrichtungen und Computerprogramme für ein Fahrzeug und einen Server. Durch das Fahrzeug wird eine Fahrzeug-zu-Fahrzeug-Nachricht von einem weiteren Fahrzeug empfangen. Diese Fahrzeug-zu-Fahrzeug-Nachricht umfasst einen Hinweis auf eine Position des weiteren Fahrzeugs. Das empfangende Fahrzeug kann nun eine Empfangssignalstärke der Fahrzeug-zu-Fahrzeug-Nachricht zu einer Distanz zu dem weiteren Fahrzeug, die sich aus der Position des weiteren Fahrzeugs ergibt, in Verhältnis setzen. Basierend auf diesem Verhältnis kann nun die empfangene Fahrzeug-zu-Fahrzeug-Nachricht verifiziert werden, etwa indem überprüft wird, ob die Empfangssignalstärke zu der angegebenen Position des weiteren Fahrzeugs passt.

Ausführungsbeispiele schaffen ein Verfahren für ein erstes Fahrzeug. Das Verfahren umfasst ein Empfangen einer Fahrzeug-zu-Fahrzeug-Nachricht von einem zweiten Fahrzeug. Die Fahrzeug-zu-Fahrzeug-Nachricht umfasst eine Positionsinformation über das zweite Fahrzeug. Das Verfahren umfasst ein Bestimmen einer Distanz zwischen dem ersten Fahrzeug und dem zweiten Fahrzeug basierend auf einem Inhalt der Fahrzeug-zu-Fahrzeug-Nachricht. Das Verfahren umfasst ein Bestimmen einer Empfangssignalstärke der Fahrzeug-zu-Fahrzeug-Nachricht. Das Verfahren umfasst ein Bestimmen einer Information über ein Verhältnis zwischen der Empfangssignalstärke und der Distanz. Das Verfahren umfasst ein Verifizieren der Positionsinformation des zweiten Fahrzeugs basierend auf der Information über das Verhältnis zwischen der Empfangssignalstärke und der Distanz.

Durch das Bestimmen des Verhältnisses zwischen der Empfangssignalstärke und der Distanz kann die Vertrauenswürdigkeit der Fahrzeug-zu-Fahrzeug-Nachricht überprüft werden. So kann etwa über das Verifizieren der Positionsinformation herausgefunden werden, ob die Fahrzeug-zu-Fahrzeug-Nachricht vertrauenswürdig ist.

Das Verfahren kann ferner ein Bestimmen einer Information über ein zu erwartendes Verhältnis zwischen der Empfangssignalstärke der Fahrzeug-zu-Fahrzeug-Nachricht und der Distanz zwischen dem ersten Fahrzeug und zweiten Fahrzeug basierend auf einer Mehrzahl von Fahrzeug-zu-Fahrzeug-Nachrichten von einer Mehrzahl von weiteren Fahrzeugen umfassen. Das Verifizieren der Positionsinformation kann auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug basieren. So kann beispielsweise das Fahrzeug selbst herausfinden, in welcher Distanz oder an welcher Position welche Empfangssignalstärke zu erwarten ist.

Alternativ (oder zusätzlich) kann das Verfahren ein Empfangen einer Information über ein zu erwartendes Verhältnis zwischen der Empfangssignalstärke der Fahrzeug-zu-Fahrzeug-Nachricht und der Distanz zwischen dem ersten Fahrzeug und dem zweiten Fahrzeug von einem Server umfassen. Das Verifizieren der Positionsinformation kann auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug basieren. So kann beispielsweise das Fahrzeug mit Hilfe eines Servers herausfinden, in welcher Distanz oder an welcher Position welche Empfangssignalstärke zu erwarten ist.

Beispielsweise kann die Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug als Teil einer Karte mit Information über zu erwartende Empfangssignalstärken von Fahrzeug-zu-Fahrzeug-Nachrichten für eine Mehrzahl von Positionen und/oder Distanzen empfangen werden. Die Karte kann beispielsweise effizient einer Vielzahl von Fahrzeugen an einer Vielzahl von Orten (eines Gebietes) bereitgestellt werden.

In manchen Ausführungsbeispielen ist die Fahrzeug-zu-Fahrzeug-Nachricht durch eine kryptographische Signatur gesichert. Die kryptographische Signatur der Fahrzeug-zu-Fahrzeug-Nachricht kann dazu ausgelegt sein, um eine Identität eines Senders der Fahrzeug-zu-Fahrzeug-Nachricht zu bestätigen. Das Verifizieren der Positionsinformation kann als zweiter Faktor in der Bestätigung der Identität des Senders der Fahrzeug-zu-Fahrzeug-Nachricht genutzt werden. So kann eine Sicherheit des Signatur-basierten Systems erhöht werden.

In manchen Ausführungsbeispielen umfasst das Verfahren ein Verwerfen der Fahrzeug-zu-Fahrzeug-Nachricht falls die Verifikation der Position fehlschlägt. So kann das erste Fahrzeug etwa von schadhaften Fahrzeug-zu-Fahrzeug-Nachrichten geschützt werden.

In einigen Ausführungsbeispielen umfasst das Verfahren ein Bereitstellen einer Information über die empfangene Fahrzeug-zu-Fahrzeug-Nachricht für einen Server. Die Information über die empfangene Fahrzeug-zu-Fahrzeug-Nachricht kann eine Information über eine Position des ersten Fahrzeugs, Information über eine Position des zweiten Fahrzeugs und eine Information über die Empfangssignalstärke umfassen. Durch den Server kann eine Datenverarbeitung über Daten mehrerer Fahrzeuge durchgeführt werden, um eine Vielzahl von Orten abzudecken oder um eine Genauigkeit oder Aussagekraft der gesammelten Daten zu erhöhen.

Ausführungsbeispiele schaffen ferner ein Verfahren für einen Server. Das Verfahren umfasst ein Empfangen von Information über eine Mehrzahl von empfangenen Fahrzeug-zu-Fahrzeug-Nachrichten. Die Information über die Mehrzahl von empfangenen Fahrzeug-zu-Fahrzeug-Nachrichten umfasst für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht. Das Verfahren umfasst ein Berechnen einer Karte mit Information über zu erwartende Empfangssignalstärken von Fahrzeug-zu-Fahrzeug-Nachrichten für eine Mehrzahl von Positionen und/oder Distanzen basierend auf der Information über die Mehrzahl von empfangenen Fahrzeug-zu-Fahrzeug-Nachrichten. Das Verfahren umfasst ein Bereitstellen der Karte mit Information über zu erwartende Empfangssignalstärken von Fahrzeug-zu-Fahrzeug-Nachrichten für eine Mehrzahl von Positionen und/oder Distanzen für ein oder mehrere Fahrzeuge. Die Karte kann von einer Mehrzahl von Fahrzeugen genutzt werden, um ein Verhältnis aus einer tatsächlich gemessenen Empfangssignalstärke und einer (angeblichen) Distanz zu einem sendenden Fahrzeug zu überprüfen.

Ausführungsbeispiele schaffen ferner ein Programm mit einem Programmcode zum Durchführen eines der Verfahren, wenn der Programmcode auf einem Computer, einem Prozessor, einem Kontrollmodul oder einer programmierbaren Hardwarekomponente ausgeführt wird.

Ausführungsbeispiele schaffen ferner eine Vorrichtung für ein erstes Fahrzeug. Die Vorrichtung umfasst ein Kommunikationsmodul für eine Fahrzeug-zu-Fahrzeugkommunikation mit weiteren Fahrzeugen. Die Vorrichtung umfasst ferner ein Kontrollmodul ausgebildet zum Empfangen einer Fahrzeug-zu-Fahrzeug-Nachricht von einem zweiten Fahrzeug über das Kommunikationsmodul. Die Fahrzeug-zu-Fahrzeug-Nachricht umfasst eine Positionsinformation über das zweite Fahrzeug. Das Kontrollmodul ist ferner ausgebildet zum Bestimmen einer Distanz zwischen dem ersten Fahrzeug und dem zweiten Fahrzeug basierend auf einem Inhalt der Fahrzeug-zu-Fahrzeug-Nachricht. Das Kontrollmodul ist ferner ausgebildet zum Bestimmen einer Empfangssignalstärke der Fahrzeug-zu-Fahrzeug-Nachricht. Das Kontrollmodul ist ferner ausgebildet zum Bestimmen einer Information über ein Verhältnis zwischen der Empfangssignalstärke und der Distanz. Das Kontrollmodul ist ferner ausgebildet zum Verifizieren der Positionsinformation des zweiten Fahrzeugs basierend auf der Information über das Verhältnis zwischen der Empfangssignalstärke und der Distanz.

Ausführungsbeispiele schaffen ferner eine Vorrichtung für einen Server. Die Vorrichtung umfasst eine Schnittstelle zum Kommunizieren mit ein oder mehreren Fahrzeugen. Die Vorrichtung umfasst ferner ein Kontrollmodul, ausgebildet zum Empfangen von Information über eine Mehrzahl von empfangenen Fahrzeug-zu-Fahrzeug-Nachrichten über die Schnittstelle. Die Information über die Mehrzahl von empfangenen Fahrzeug-zu-Fahrzeug-Nachrichten umfasst für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht. Das Kontrollmodul ist ausgebildet zum Berechnen einer Karte mit Information über zu erwartende Empfangssignalstärken von Fahrzeug-zu-Fahrzeug-Nachrichten für eine Mehrzahl von Positionen und/oder Distanzen basierend auf der Information über die Mehrzahl von empfangenen Fahrzeug-zu-Fahrzeug-Nachrichten. Das Kontrollmodul ist ausgebildet zum Bereitstellen der Karte mit Information über zu erwartende Empfangssignalstärken von Fahrzeug-zu-Fahrzeug-Nachrichten für eine Mehrzahl von Positionen und/oder Distanzen für ein oder mehrere Fahrzeuge über die Schnittstelle.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:

Fign. 1a und 1b zeigen Flussdiagramme von Ausführungsbeispielen eines Verfahrens für ein erstes Fahrzeug;

Fig. 1c zeigt ein Blockdiagramm eines Ausführungsbeispiels einer Vorrichtung für ein Fahrzeug;

Fig. 2a zeigt ein Flussdiagramm eines Ausführungsbeispiels eines Verfahrens für einen Server;

Fig. 2b zeigt ein Blockdiagramm eines Ausführungsbeispiels einer Vorrichtung für einen Server;

Fig. 3 zeigt ein Diagramm einer Empfangssignalstärke bei unterschiedlichen Distanzen; und

Fig. 4 zeigt ein schematisches Diagramm einer PKI-Architektur.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

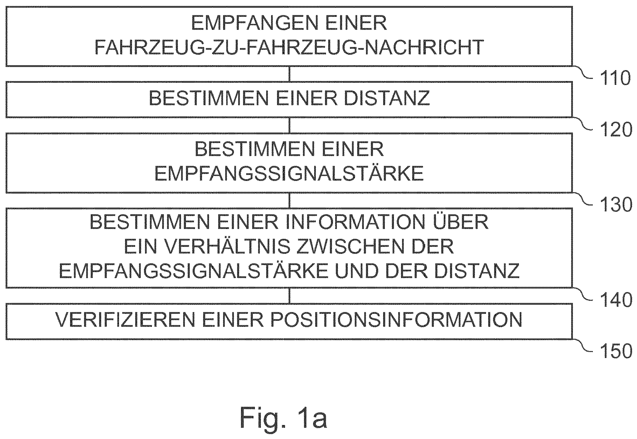

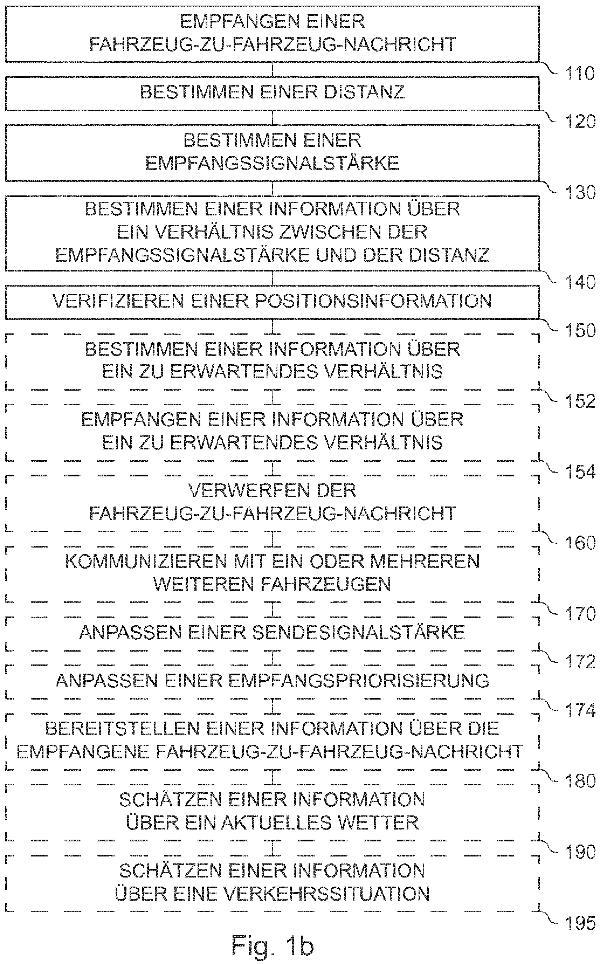

Fign. 1a und 1b zeigen Flussdiagramme von Ausführungsbeispielen eines Verfahrens für ein erstes Fahrzeug 100. Das Verfahren umfasst ein Empfangen 110 einer Fahrzeug-zu-Fahrzeug-Nachricht von einem zweiten Fahrzeug 105. Die Fahrzeug-zu-Fahrzeug-Nachricht umfasst eine Positionsinformation über das zweite Fahrzeug. Das Verfahren umfasst ein Bestimmen 120 einer Distanz zwischen dem ersten Fahrzeug 100 und dem zweiten Fahrzeug 105 basierend auf einem Inhalt der Fahrzeug-zu-Fahrzeug-Nachricht. Das Verfahren umfasst Bestimmen 130 einer Empfangssignalstärke der Fahrzeug-zu-Fahrzeug-Nachricht. Das Verfahren umfasst ein Bestimmen 140 einer Information über ein Verhältnis zwischen der Empfangssignalstärke und der Distanz. Das Verfahren umfasst ein Verifizieren 150 der Positionsinformation (des zweiten Fahrzeugs) basierend auf der Information über das Verhältnis zwischen der Empfangssignalstärke und der Distanz. Das Verfahren kann beispielsweise von dem ersten Fahrzeug ausgeführt werden.

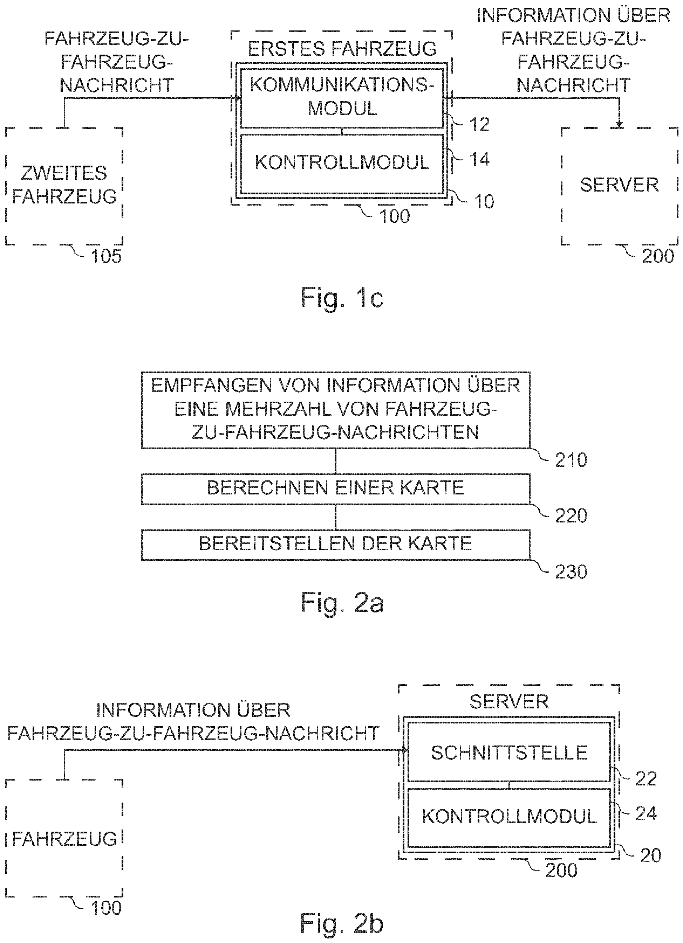

Fig. 1c zeigt ein Blockdiagramm eines Ausführungsbeispiels einer Vorrichtung 10 für ein erstes Fahrzeug 100. Die Vorrichtung 10 umfasst ein Kommunikationsmodul 12 für eine Fahrzeug-zu-Fahrzeugkommunikation mit weiteren Fahrzeugen. Die Vorrichtung 10 umfasst ferner ein Kontrollmodul 14, das mit dem Kommunikationsmodul gekoppelt ist. Das Kontrollmodul 14 kann ausgebildet sein, um das Verfahren der Fign. 1a und/oder 1b auszuführen, etwa im Zusammenspiel mit dem Kommunikationsmodul 14. Beispielsweise ist das Kontrollmodul 14 ausgebildet zum Empfangen der Fahrzeug-zu-Fahrzeug-Nachricht von dem zweiten Fahrzeug 105 über das Kommunikationsmodul 12. Die Fahrzeug-zu-Fahrzeug-Nachricht umfasst eine Positionsinformation über das zweite Fahrzeug. Das Kontrollmodul 14 ist ausgebildet zum Bestimmen der Distanz zwischen dem ersten Fahrzeug und dem zweiten Fahrzeug basierend auf dem Inhalt der Fahrzeug-zu-Fahrzeug-Nachricht. Das Kontrollmodul 14 ist ausgebildet zum Bestimmen der Empfangssignalstärke der Fahrzeug-zu-Fahrzeug-Nachricht. Das Kontrollmodul 14 ist ausgebildet zum Bestimmen der Information über das Verhältnis zwischen der Empfangssignalstärke und der Distanz. Das Kontrollmodul 14 ist ausgebildet zum Verifizieren 150 der Positionsinformation basierend auf der Information über das Verhältnis zwischen der Empfangssignalstärke und der Distanz. Fig. 1c zeigt ferner das erste Fahrzeug 100 umfassend die Vorrichtung 10.

Die folgende Beschreibung bezieht sich sowohl auf das Verfahren der Fign. 1a und/oder 1b, als auch auf die Vorrichtung der Fig. 1c.

Ausführungsbeispiele schaffen ein Verfahren, eine Vorrichtung und ein Computerprogramm für ein erstes Fahrzeug. Das erste Fahrzeug kommuniziert mit weiteren Fahrzeugen, etwa dem zweiten Fahrzeug 105 (und/oder Infrastrukturgeräten am Fahrbahnrand). Dabei setzt das erste Fahrzeug Fahrzeug-zu-Fahrzeug-Kommunikation ein. Fahrzeug-zu-Fahrzeug-Kommunikation ist Kommunikation, die über ein Fahrzeug-spezifisches Kommunikationssystem oder Kommunikationsprotokoll durchgeführt werden. Dabei können unterschiedliche Ansätze verfolgt werden. Beispielsweise kann die Fahrzeug-zu-Fahrzeug-Kommunikation (etwa die Fahrzeug-zu-Fahrzeug-Nachricht) über ein Kommunikationssystem übertragen werden, das auf dem Standard IEEE 802.11p basiert (Institute of Electrical and Electronic Engineers, Institut der Elektro- und Elektronikingenieure, auch WLANp genannt, Wireless Local Area Network (Drahtloses lokales Netzwerk) gemäß Standard IEEE 802.11p). In diesem Fall findet die Fahrzeug-zu-Fahrzeug-Kommunikation meist direkt zwischen den Fahrzeugen statt, beispielsweise ohne eine Basisstation einzubeziehen. Alternativ kann die Fahrzeug-zu-Fahrzeug-Kommunikation eine Fahrzeug-zu-Fahrzeug-Kommunikation sein, die auf einem zellulären Mobilkommunikationssystem basiert (auch engl. Cellular V2X, C-V2X). Hier werden im Allgemeinen zwei Betriebsarten unterschieden: Eine erste Betriebsart, bei der die Kommunikation über eine Basisstation des zellulären Mobilkommunikationssystems geführt wird, und eine zweite Betriebsart, bei der die Kommunikation, mit Ressourcen des zellulären Mobilkommunikationssystems, direkt zwischen den Fahrzeugen geführt wird. In dem zweiten Betriebsmodus kann eine Basisstation des zellulären Kommunikationssystems optional dazu genutzt werden, um die Ressourcen des zellulären Mobilkommunikationssystems den Fahrzeugen zuzuweisen. Steht eine Basisstation nicht zur Verfügung, so können die Fahrzeuge unabhängig von der Basisstation die Ressourcenallokation durchführen. Im Folgenden wird von einer direkten Fahrzeug-zu-Fahrzeug-Kommunikation ausgegangen, etwa basierend auf 802.11p oder C-V2X, d.h. die Fahrzeug-zu-Fahrzeug-Nachricht wird direkt von dem zweiten Fahrzeug (ohne, dass die Fahrzeug-zu-Fahrzeug-Nachricht über eine Basisstation geleitet wird), empfangen. Alternativ zu einem zweiten Fahrzeug kann das erste Fahrzeug auch mit einem Infrastrukturgerät am Fahrbahnrand kommunizieren, d.h. die Fahrzeug-zu-Fahrzeug-Nachricht kann von einem Infrastrukturgerät am Fahrbahnrand empfangen werden und die Distanz und das Verhältnis können in Bezug auf das Infrastrukturgerät am Fahrbahnrand berechnet werden.

Das Verfahren umfasst das Bestimmen 120 der Distanz zwischen dem ersten Fahrzeug und dem zweiten Fahrzeug basierend auf dem Inhalt der Fahrzeug-zu-Fahrzeug-Nachricht. So umfasst die Fahrzeug-zu-Fahrzeug-Nachricht eine Positionsinformation über das zweite Fahrzeug. So kann beispielsweise jedes Fahrzeug den Fahrzeug-zu-Fahrzeug-Nachrichten, die es verschickt, seine Position beifügen. Diese Positionsinformation kann von den anderen Fahrzeugen für verschiedene Dinge genutzt werden, etwa um eine Karte von Fahrzeugen zu konstruieren, die das empfangende Fahrzeug umgeben, so dass das empfangende Fahrzeug diesen Fahrzeugen gewahr wird und/oder diese Fahrzeuge gegebenenfalls ansprechen kann, etwa um koordinierte Fahrmanöver auszuführen. Die Positionsinformation kann, zusammen mit einer Position des ersten Fahrzeugs, genutzt werden um die Distanz zwischen dem ersten Fahrzeug und dem zweiten Fahrzeug zu bestimmen. In andere Worten kann das Verfahren ein Bestimmen einer Positionsinformation über das erste Fahrzeug umfassen. Die Positionsinformation kann dabei jeweils die Position des jeweiligen Fahrzeugs anzeigen. Zum Bestimmen der Positionsinformation kann das Verfahren dabei beispielsweise ein satellitenbasiertes Positionierungssystem, wie etwa das Globale Positionierungs-System (GPS), oder ein Mobilkommunikationssystems-basiertes Positionierungssystem verwenden. Basierend auf den Positionsinformationen des ersten und des zweiten Fahrzeugs kann die Distanz zwischen den beiden Fahrzeugen berechnet werden.

Das Verfahren umfasst ferner das Bestimmen 130 der Empfangssignalstärke der Fahrzeug-zu-Fahrzeug-Nachricht. Dazu kann das Verfahren beispielsweise ein Messen der Empfangssignalstärke umfassen, oder ein Abrufen oder Empfangen einer Information über die Empfangssignalstärke von einem Kommunikationsmodul 12 des Fahrzeugs. Dabei kann die Empfangssignalstärke beispielsweise einer Received Signal Strength Indication (RSSI, Indikator für die Empfangssignalstärke) entsprechen oder auf der RSSI basieren.

Das Verfahren umfasst ferner das Bestimmen 140 der Information über das Verhältnis zwischen der Empfangssignalstärke und der Distanz. Dazu kann das Verfahren beispielsweise ein Berechnen des Verhältnisses zwischen der Empfangssignalstärke umfassen, etwa indem die Empfangssignalstärke durch die Distanz geteilt wird (oder umgekehrt). In anderen Worten kann die Information über das Verhältnis zwischen der Empfangssignalstärke und der Distanz den Quotienten aus der Empfangssignalstärke und der Distanz oder den Quotienten aus der Distanz und der Empfangssignalstärke umfassen oder auf dieser basieren. In manchen Ausführungsbeispielen können weitere Faktoren Einfluss nehmen, wie etwa das Wetter, das Verkehrsaufkommen, die Uhrzeit oder ein Empfänger-, Sender- oder richtungsspezifischer Korrekturwert. In manchen Ausführungsbeispielen kann die Fahrzeug-zu-Fahrzeug-Nachricht ferner Information über eine Sendesignalstärke der Fahrzeug-zu-Fahrzeug-Nachricht umfassen. Die Information über das Verhältnis zwischen der Empfangssignalstärke und der Distanz kann ferner auf der Sendesignalstärke der Fahrzeug-zu-Fahrzeug-Nachricht basieren, etwa auf einem Quotienten aus Empfangssignalstärke und Sendesignalstärke.

Dieses Verhältnis kann nun genutzt werden, um Schlüsse über die Fahrzeug-zu-Fahrzeug-Nachricht zu treffen. So umfasst die Fahrzeug-zu-Fahrzeug-Nachricht, wie bereits zuvor ausgeführt, die Positionsinformation über das zweite Fahrzeug. Das Verfahren umfasst zudem das Verifizieren 150 der Positionsinformation basierend auf der Information über das Verhältnis zwischen der Empfangssignalstärke und der Distanz umfassen. In anderen Worten kann das Verfahren ein Überprüfen, ob die Empfangssignalstärke zur Position (und damit auch zu der Positionsinformation des zweiten Fahrzeugs) passt, umfassen. Dazu kann in einem einfachen Ausführungsbeispiel beispielsweise eine Näherungsformel genutzt werden, um eine zu erwartende Empfangssignalstärke für die Fahrzeug-zu-Fahrzeug-Nachricht zu berechnen. In anderen Worten kann das Verfahren ein Berechnen einer zu erwartenden Empfangssignalstärke basierend auf der Distanz und basierend auf einer Näherungsformel umfassen. Die Positionsinformation kann dann basierend auf einem Vergleich zwischen der zu erwartenden Empfangssignalstärke und der (tatsächlich bestimmten) Empfangssignalstärke bestimmt werden, so dass die Verifikation fehlschlägt, falls die Empfangssignalstärke mehr als ein Schwellenwert von der zu erwartenden Empfangssignalstärke abweicht.

Alternativ kann die zu Empfangssignalstärke basierend auf Erwartungswerten bestimmt werden, die auf einer repräsentativeren Basis basieren, etwa durch Vergleich mit einer Mehrzahl von weiteren Fahrzeug-zu-Fahrzeug-Nachrichten oder durch Vergleich mit einer durch einen Server bestimmten Karte über ein zu erwartendes Verhältnis zwischen der Empfangssignalstärke und der Distanz. Dies kann dem Umstand Rechnung tragen, dass unterschiedliche Orte unterschiedliche Übertragungseigenschaften haben - so kann beispielsweise durch eine kurvige Straße oder durch andere Hindernisse eine Mehrwegeausbreitung gegeben sein, da eine Line-of-Sight (wörtlich "Sichtlinie")-Kommunikation nicht oder nur selten möglich ist. Auch kann ein Unterschied zwischen Reflektionen an Betonwänden und organischem Material (wie etwa Bäumen) bestehen. Daher sind an unterschiedlichen Orten unterschiedliche Verhältnisse zwischen Empfangssignalstärke und Distanz zu erwarten. Auch eine Verkehrsdichte oder ein Wetter kann einen Einfluss auf das Verhältnis ausüben.

So kann das Verfahren beispielsweise ein Bestimmen 152 einer Information über ein zu erwartendes Verhältnis zwischen der Empfangssignalstärke der Fahrzeug-zu-Fahrzeug-Nachricht und der Distanz zwischen dem ersten Fahrzeug und zweiten Fahrzeug basierend auf einer Mehrzahl von Fahrzeug-zu-Fahrzeug-Nachrichten von einer Mehrzahl von weiteren Fahrzeugen umfassen. Dabei kann beispielsweise aus der Mehrzahl von empfangenen Fahrzeug-zu-Fahrzeug-Nachrichten eine Karte oder eine geographische Repräsentation (etwa in einem Koordinatensystem) der Positionen der Mehrzahl von weiteren Fahrzeugen erstellt werden. Innerhalb dieser Karte oder dem geographischen Koordinatensystem kann die Position des zweiten Fahrzeugs eingeordnet werden. Für die Fahrzeuge, die in der Nähe des zweiten Fahrzeugs angeordnet sind, kann nun jeweils ebenfalls eine Information über ein Verhältnis zwischen der Empfangssignalstärke und der Distanz bestimmt werden. Dieses Verhältnis der Fahrzeuge der Mehrzahl von weiteren Fahrzeugen kann nun interpoliert werden, um das zu erwartende Verhältnis zwischen der Empfangssignalstärke der Fahrzeug-zu-Fahrzeug-Nachricht und der Distanz zwischen dem ersten Fahrzeug und zweiten Fahrzeug zu bestimmen. Dieser Wert kann nun mit dem eigentlich gemessenen Verhältnis verglichen werden, um die Positionsinformation zu verifizieren. In anderen Worten kann das Verifizieren 150 der Positionsinformation auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug basieren, etwa durch Vergleichen der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug und der Information über das Verhältnis zwischen der Empfangssignalstärke und der Distanz.

Alternativ dazu (oder auch zusätzlich) kann die Information über das zu erwartende Verhältnis zwischen der Empfangssignalstärke und der Distanz auch von einem Server bestimmt werden, etwa indem Fahrzeug-zu-Fahrzeug-Nachrichten einer Vielzahl von Fahrzeugen an der betreffenden Position ausgewertet werden und statistisch erfasst werden. Diese Information kann von dem Server für mehrere Fahrzeuge bereitgestellt werden, etwa in Form einer Karte. In anderen Worten kann das Verfahren ein Empfangen 154 einer Information über das zu erwartendes Verhältnis zwischen der Empfangssignalstärke der Fahrzeug-zu-Fahrzeug-Nachricht und der Distanz zwischen dem ersten Fahrzeug und dem zweiten Fahrzeug von einem Server umfassen. Auch in diesem Fall kann das Verifizieren der Positionsinformation auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug basieren. So kann die Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug als Teil einer Karte mit Information über zu erwartende Empfangssignalstärken von Fahrzeug-zu-Fahrzeug-Nachrichten für eine Mehrzahl von Positionen und/oder Distanzen empfangen 154 werden. Dabei ist der Begriff "Karte" weit zu fassen. So können auf der "Karte" eine Mehrzahl von Messwerten oder Verhältniswerten an einer Mehrzahl von Positionen und/oder für eine Mehrzahl von Distanzen umfasst sein, die in einem geographischen Koordinatensystem angeordnet sind. Dabei braucht die Karte nicht notwendigerweise andere Kartenmaterialien, wie etwa Straßen (oder ähnliches) umfassen. Es genügt, wenn eine Mehrzahl von Werten in einem geographischen Koordinatensystem positioniert sind.

Entsprechend können dem Server auch Informationen bereitgestellt werden, aus denen solch eine Karte generiert werden kann. Daher kann das Verfahren ein Bereitstellen 180 einer Information über die empfangene Fahrzeug-zu-Fahrzeug-Nachricht für den Server 200 umfassen. Die Information über die empfangene Fahrzeug-zu-Fahrzeug-Nachricht kann beispielsweise eine Information über eine Position des ersten Fahrzeugs, Information über eine Position des zweiten Fahrzeugs (etwa absolut oder relativ zu dem ersten Fahrzeug) und eine Information über die Empfangssignalstärke umfassen.

Dabei kann das Verifizieren der Positionierung beispielsweise genutzt werden, um zu entscheiden, ob die Fahrzeug-zu-Fahrzeug-Nachricht vertrauenswürdig ist. So kann die Fahrzeug-zu-Fahrzeug-Nachricht beispielsweise als vertrauenswürdig eingestuft werden, wenn die Positionsinformation in etwa zu dem bestimmten Verhältnis passt. Ist dies nicht der Fall, so kann die Verifizierung fehlschlagen. In diesem Fall kann die Fahrzeug-zu-Fahrzeug-Nachricht beispielsweise verworfen werden. In anderen Worten kann das Verfahren ein Verwerfen 160 der Fahrzeug-zu-Fahrzeug-Nachricht umfasst, falls die Verifikation der Position fehlschlägt.

In dem vorigen Beispiel wird das Verhältnis als einziges Merkmal genutzt, um zu entscheiden, ob die Fahrzeug-zu-Fahrzeug-Nachricht vertrauenswürdig ist. Grundsätzlich kann die Verifikation auch als zweiter Faktor genutzt werden, etwa zusammen mit einer kryptografischen Absicherung der Fahrzeug-zu-Fahrzeug-Nachricht. So kann die Fahrzeug-zu-Fahrzeug-Nachricht beispielsweise durch eine kryptographische Signatur gesichert sein, also beispielsweise kryptographisch signiert sein. Die kryptographische Signatur kann beispielsweise eine kryptographische Signatur einer sogenannten PKI-Architektur sein (Public-Key-Infrastructure, wörtlich Öffentlicher-Schlüssel-Architektur). In diesem Fall kann die Signatur beispielsweise genutzt werden um anzuzeigen, dass die Fahrzeug-zu-Fahrzeug-Nachricht von einem bestimmten Sender (und auch von einem vertrauenswürdigen Sender) stammt. In anderen Worten kann die kryptographische Signatur der Fahrzeug-zu-Fahrzeug-Nachricht dazu ausgelegt sein, um eine Identität eines Senders der Fahrzeug-zu-Fahrzeug-Nachricht zu bestätigen. Das Verifizieren 150 der Positionsinformation kann als zweiter Faktor in der Bestätigung der Identität des Senders der Fahrzeug-zu-Fahrzeug-Nachricht genutzt werden. Der erste Faktor kann die kryptographische Signatur der Fahrzeug-zu-Fahrzeug-Nachricht sein. In anderen Worten kann das Verfahren ein Überprüfen der Fahrzeug-zu-Fahrzeug-Nachricht basierend auf der kryptographischen Signatur und basierend auf der Verifikation der Positionsinformation umfassen.

In manchen Ausführungsbeispielen kann die der Information über das Verhältnis zwischen der Empfangssignalstärke und der Distanz auch genutzt werden, um einen Sender oder Empfänger des ersten Fahrzeugs anzupassen, etwa um die Wahrscheinlichkeit einer erfolgreichen Kommunikation zu erhöhen. In anderen Worten kann das Verfahren ein Kommunizieren 170 mit ein oder mehreren weiteren Fahrzeugen basierend auf der Information über das Verhältnis zwischen der Empfangssignalstärke und der Distanz umfassen. Dabei kann die Information über das Verhältnis zwischen der Empfangssignalstärke und der Distanz beispielsweise in zumindest zwei verschiedenen Wegen genutzt werden: Einerseits kann die Sendesignalstärke angepasst werden, etwa falls festgestellt wird, dass eine Empfangssignalstärke in der Kommunikation mit dem gleichen Fahrzeug (oder einem Fahrzeug in der Nähe) außergewöhnlich niedrig ist. In anderen Worten kann das Verfahren ein Anpassen 172 einer Sendesignalstärke für die Kommunikation mit den ein oder mehreren weiteren Fahrzeugen basierend auf der Information über das Verhältnis zwischen der Empfangssignalstärke und der Distanz umfassen. So kann die Sendesignalstärke etwa so angepasst werden, dass die zu erwartende Dämpfung (die sich aus dem Verhältnis zwischen Empfangssignalstärke und Distanz ergibt) ausgeglichen wird. In manchen Fällen kann dazu die Sendesignalstärke erhöht werden, um eine überdurchschnittlich hohe zu erwartende Dämpfung zu überwinden, in anderen Fällen kann die Sendesignalstärke sogar gesenkt werden, etwa falls eine außergewöhnlich geringe Dämpfung zu erwarten steht. Alternativ oder zusätzlich kann das Verfahren ein Anpassen 174 einer Empfangspriorisierung für die Kommunikation mit den ein oder mehreren weiteren Fahrzeugen basierend auf der Information über das Verhältnis zwischen der Empfangssignalstärke und der Distanz umfassen. So kann beispielsweise eine Dekodierung von Fahrzeug-zu-Fahrzeug-Nachrichten priorisiert werden, die von einer Position oder Distanz stammen, aus der ein unvorteilhaftes Verhältnis aus Empfangssignalstärke und Distanz zu erwarten steht.

Doch auch Lokal auf dem ersten Fahrzeug kann das Verhältnis genutzt werden, um Schlüsse über das Umfeld des ersten Fahrzeugs zu treffen. So kann das Verfahren ein Schätzen 190 von einer Information über ein aktuelles Wetter basierend auf der Information über das Verhältnis zwischen der Empfangssignalstärke und der Distanz umfassen. Dabei kann das Verhältnis beispielsweise von einem Luftdruck und einer Luftfeuchtigkeit abhängen - Werte für beides können beispielsweise aus dem Verhältnis zwischen der Empfangssignalstärke und der Distanz berechnet werden. Doch auch eine Verkehrsdichte kann das Verhältnis beeinflussen: So kann das Verfahren ferner ein Schätzen 195 von einer Information über eine Verkehrsdichte basierend auf der Information über das Verhältnis zwischen der Empfangssignalstärke und der Distanz umfassen. In beiden Fällen können Erfahrungswerte, wie etwa die Näherungsformel oder die Information über das zu erwartende Verhältnis genutzt werden, um die Schätzung vorzunehmen.

In Ausführungsbeispielen kann das Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar.

Das Kommunikationsmodul 12 kann als Mittel zum Kommunizieren, ein oder mehrere Kommunikationseinheiten und/oder ein oder mehrere Kommunikationsgeräte ausgebildet sein. Das Kommunikationsmodul kann ein oder mehrere Elemente der Gruppe von ein oder mehrere Leistungsverstärker, ein oder mehrere Filter oder Filterschaltungen, ein oder mehrere Diplexer, ein oder mehrere Duplexer, ein oder mehrere Digital-zu-Analog-Konverter, ein oder mehrere Modulatoren, ein oder mehrere Demodulatoren, ein oder mehrere Mischer, ein oder mehrere Antennen etc. umfassen.

In zumindest manchen Ausführungsbeispielen kann das erste Fahrzeug 100 (sowie das zweite Fahrzeug und die weiteren Fahrzeuge) beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

In mindestens einigen Ausführungsformen kann das Kommunikationssystem ein Fahrzeugkommunikationssystem sein, z.B. ein Fahrzeug-Netzwerk-Kommunikationssystem (V2N). In anderen Worten können die Fahrzeuge, wie etwa das erste Fahrzeug, das zweite Fahrzeuge und/oder die weiteren Fahrzeuge, über ein Fahrzeugkommunikationssystem kommunizieren.

So kann beispielsweise das Fahrzeugkommunikationssystem einem Fahrzeug-zu-FahrzeugKommunikationssystem entsprechen, das auf zellulärer Mobilfunktechnologie basiert, also Cellular V2X, C-V2X (Cellular-Vehicle-to-Anything), etwa gemäß einem der Standards Long Term Evolution Vehicle-to-Anything, LTE-V2X, Mobilkommunikationssystem der 5. Generation V2X, 5G-V2X und New Radio V2X, NR-V2X. Das Fahrzeugkommunikationssystem kann dabei zwei Kommunikationsmodi unterstützen: PC5, das zwischen Fahrzeugen verwendet wird, und Uu, das zwischen Fahrzeugen und Basisstationen verwendet wird. Unter Verwendung von PC5 und Uu kann das mobile Kommunikationssystem eine direkte Fahrzeug-zu-Fahrzeug-Kommunikation (ohne Beteiligung einer Basisstation als Kommunikations-Hop unter Verwendung von PC5, entweder von der Basisstation verwaltet oder autonom), eine Fahrzeug-zu-Fahrzeug-Kommunikation über eine Basisstation des mobilen Kommunikationssystems und eine Fahrzeug-zu-Netzwerk-Kommunikation, deren Ressourcen durch eine Basisstation des mobilen Kommunikationssystems vermittelt werden, unterstützen. Die direkte Fahrzeug-zu-Fahrzeug-Kommunikation kann auf den gleichen Funkressourcen (z.B. den gleichen Frequenzressourcen) basieren wie die Kommunikation über die Basisstation. Alternativ kann die Fahrzeugkommunikationssystem auf dem Standard IEEE 802.11p basieren. In diesem Fall kann eine direkte Fahrzeug-zu-Fahrzeug-Kommunikation genutzt werden, d.h. die Nachrichten werden (im Allgemeinen) nicht über eine Basisstation geleitet.

Mehr Details und Aspekte der des Verfahrens und der Vorrichtung werden in Verbindung mit dem Konzept oder Beispielen genannt, die vorher oder nachher (z.B. Fig. 2a bis 4) beschrieben werden. Das Verfahren und/oder die Vorrichtung kann/können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 2a zeigt ein Flussdiagramm eines Ausführungsbeispiels eines Verfahrens für einen Server 200. Das Verfahren umfasst ein Empfangen 210 von Information über eine Mehrzahl von empfangenen Fahrzeug-zu-Fahrzeug-Nachrichten. Die Information über die Mehrzahl von empfangenen Fahrzeug-zu-Fahrzeug-Nachrichten umfasst für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht. Das Verfahren umfasst ein Berechnen 220 einer Karte mit Information über zu erwartende Empfangssignalstärken von Fahrzeug-zu-Fahrzeug-Nachrichten für eine Mehrzahl von Positionen und/oder Distanzen basierend auf der Information über die Mehrzahl von empfangenen Fahrzeug-zu-Fahrzeug-Nachrichten. Das Verfahren umfasst ferner ein Bereitstellen 230 der Karte mit Information über zu erwartende Empfangssignalstärken von Fahrzeug-zu-Fahrzeug-Nachrichten für eine Mehrzahl von Positionen und/oder Distanzen für ein oder mehrere Fahrzeuge. Das Verfahren kann beispielsweise von dem Server 200 ausgeführt werden.

Fig. 2b zeigt ein Blockdiagramm eines Ausführungsbeispiels einer entsprechenden Vorrichtung 20 für den Sever 200. Die Vorrichtung 20 umfasst eine Schnittstelle 22 zum Kommunizieren mit ein oder mehreren Fahrzeugen. Die Vorrichtung 20 umfasst ferner ein Kontrollmodul 24, das mit der Schnittstelle 22 gekoppelt ist. Das Kontrollmodul 24 kann ausgebildet sein, um das Verfahren von Fig. 2a auszuführen, etwa in Verbindung mit der Schnittstelle 22. Beispielsweise ist das Kontrollmodul 24 ausgebildet zum Empfangen der Information über die Mehrzahl von empfangenen Fahrzeug-zu-Fahrzeug-Nachrichten über die Schnittstelle 22. Das Kontrollmodul 24 ist ausgebildet zum Berechnen der Karte mit der Information über die zu erwartenden Empfangssignalstärken von Fahrzeug-zu-Fahrzeug-Nachrichten für die Mehrzahl von Positionen und/oder Distanzen basierend auf der Information über die Mehrzahl von empfangenen Fahrzeug-zu-Fahrzeug-Nachrichten. Fig. 2b zeigt ferner den Server 200 umfassend die Vorrichtung 20. Fig. 2b zeigt ferner ein System umfassend den Server 200 und ein oder mehrere Fahrzeuge 100, etwa das Fahrzeug 100 von Fig. 1c.

Die folgende Beschreibung bezieht sich sowohl auf das Verfahren von Fig. 2a als auch auf die Vorrichtung 20 von Fig. 2b.

Das Verfahren umfasst das Empfangen 210 der Information über eine Mehrzahl von empfangenen Fahrzeug-zu-Fahrzeug-Nachrichten. Beispielsweise kann die Information über die Mehrzahl von empfangenen Fahrzeug-zu-Fahrzeug-Nachrichten von einer Mehrzahl von Fahrzeugen stammen. Dabei kann die Information über die Mehrzahl von empfangenen Fahrzeug-zu-Fahrzeug-Nachrichten für jede Fahrzeug-zu-Fahrzeug-Nachricht einzeln empfangen werden (etwa von jedem Fahrzeug einzeln). Alternativ kann die Information über die Mehrzahl von empfangenen Fahrzeug-zu-Fahrzeug-Nachrichten von einem (einzigen) Fahrzeug akkumuliert sein und in akkumulierter Form von dem Fahrzeug empfangen werden. In diesem Fall kann die Information über die Mehrzahl von empfangenen Fahrzeug-zu-Fahrzeug-Nachrichten von dem (einzigen) Fahrzeug empfangen werden. Grundsätzlich kann die Information über die Mehrzahl von empfangenen Fahrzeug-zu-Fahrzeug-Nachrichten über ein Kommunikationsnetzwerk empfangen werden, etwa über das Internet, wobei die Information über die Mehrzahl von empfangenen Fahrzeug-zu-Fahrzeug-Nachrichten ursprünglich von den entsprechenden Fahrzeugen über ein zelluläres Mobilkommunikationssystem übermittelt werden können.

Die Information über die Mehrzahl von empfangenen Fahrzeug-zu-Fahrzeug-Nachrichten umfasst für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht. Dies kann etwa den Informationen entsprechen, die von dem ersten Fahrzeug 100 von Fig. 1c an den Server 200 übertragen werden.

Das Verfahren umfasst ferner das Berechnen 220 der Karte mit der Information über die zu erwartenden Empfangssignalstärken von Fahrzeug-zu-Fahrzeug-Nachrichten für eine Mehrzahl von Positionen und/oder Distanzen basierend auf der Information über die Mehrzahl von empfangenen Fahrzeug-zu-Fahrzeug-Nachrichten. Dabei ist der Begriff "Karte", wie bereits geschrieben, weit zu fassen. So können auf der "Karte" eine Mehrzahl von Messwerten oder Verhältniswerten an einer Mehrzahl von Positionen und/oder für eine Mehrzahl von Distanzen umfasst sein, die in einem geographischen Koordinatensystem angeordnet sind. Dabei braucht die Karte nicht notwendigerweise andere Kartenmaterialien, wie etwa Straßen (oder ähnliches) umfassen. Es genügt, wenn eine Mehrzahl von Werten in einem geographischen System positioniert sind. Innerhalb dieser Karte oder geographischen Koordinatensystem kann für jede der Mehrzahl von Positionen und/oder Distanzen eine zu erwartende Empfangssignalstärke (oder ein zu erwartendes Verhältnis aus Empfangssignalstärke und Distanz) umfasst sein. Dabei kann die Karte dadurch berechnet werden, dass die Fahrzeug-zu-Fahrzeug-Nachrichten mit ihren Positionen des Sende-Fahrzeugs und des Empfänger-Fahrzeugs und der entsprechenden Empfangssignalstärke in einem geographischen Koordinatensystem aufgetragen werden. Das geographische Koordinatensystem kann in ein Raster unterteilt werden (etwa mit Raster-Einheiten von $1\times1$ Metern, $2\times2$ Metern oder 4x4 Metern etc.), und zwischen allen Raster-Einheiten innerhalb einer maximalen Distanz (etwa maximal 500 Metern) kann die zu erwartende Signalstärke berechnet werden, falls ein Sende-Fahrzeug und ein Empfänger-Fahrzeug einer Fahrzeug-zu-Fahrzeug-Nachricht in die Rastereinheit fällt. Die zu erwartenden Empfangssignalstärken für die übrigen Raster-Einheiten (und damit Positionen und Distanzen) können aus den bestimmten Werten interpoliert werden. Dabei können temporäre Phänomene, wie etwa eine Verkehrsdichte zu einer bestimmten Tageszeit oder ein Wetter einbezogen werden, d.h. die Karte kann tageszeitabhängige oder wetterabhängige Werte umfassen.

Das Verfahren umfasst ferner das Bereitstellen 230 der Karte mit der Information über die zu erwartenden Empfangssignalstärken von Fahrzeug-zu-Fahrzeug-Nachrichten für eine Mehrzahl von Positionen und/oder Distanzen für die ein oder mehreren Fahrzeuge, etwa über das Internet und das zelluläre Mobilkommunikationssystem.

Die Schnittstelle 22 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann die Schnittstelle 22 ausgebildet sein, um über das Internet zu kommunizieren.

In Ausführungsbeispielen kann das Kontrollmodul 24 einem beliebigen Controller oder Prozessor oder einer programmierbaren Hardwarekomponente entsprechen. Beispielsweise kann das Kontrollmodul 24 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 24 denkbar.

Mehr Details und Aspekte der des Verfahrens und der Vorrichtung werden in Verbindung mit dem Konzept oder Beispielen genannt, die vorher oder nachher (z.B. Fig. 1a bis 1c, 3 bis 4) beschrieben werden. Das Verfahren und/oder die Vorrichtung kann/können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ausführungsbeispiele schaffen ein Verfahren zur Nutzung einer ermittelten Empfangssignalstärke in einer Direktkommunikation. Mit Hilfe von IST-G5 (pWLAN, Fahrzeug-zu-Fahrzeug-Kommunikation gemäß IEEE 802.11p) oder einer anderen CAR2X-Kommunikationsverfahrens (Car-to-Anything, Fahrzeug-zu-beliebigen Kommunikationspartnern) kann ein Fahrzeug Informationen mit einem weiteren Fahrzeug oder der Infrastruktur austauschen. Dabei wird beispielsweise auch die Position des Senders mit übertragen.

In dem hier vorgestellten Verfahren wird die Empfangssignalstärke (etwa in Form der RSSI - received signal strength indication, Empfangssignalstärkeindikation) des Datenempfängers einer direkten Datenkommunikation zwischen zwei Fahrzeugen (Car2Car) oder zwischen einem Fahrzeug und einer Infrastruktur (C2I, Car-to-Infrastructure, Fahrzeug-zu-Infrastruktur) ausgewertet.

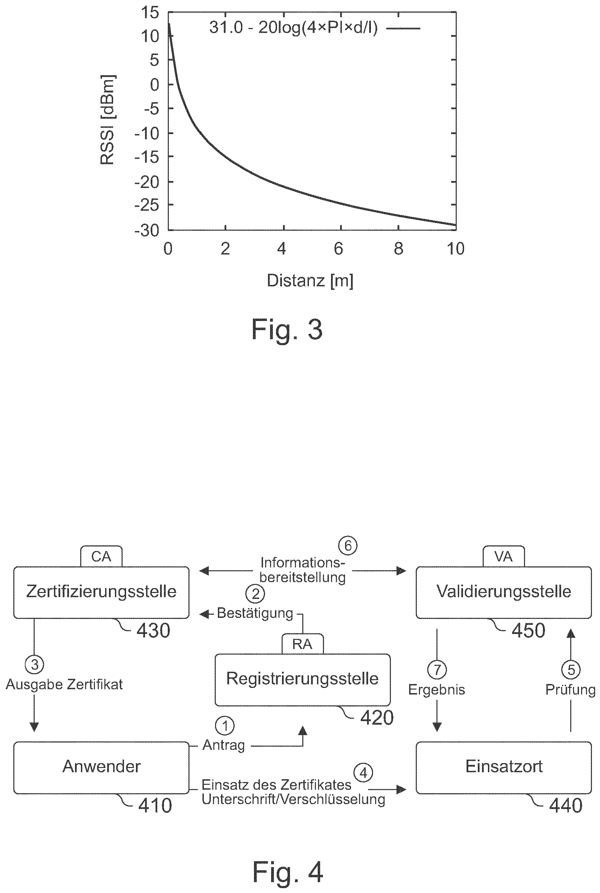

Da sowohl vom Sender als auch vom Empfänger der Standort bekannt ist, lässt sich deren Abstand berechnen. Wird zusätzlich zum momentanen Abstand auch die momentane RSSI betrachtet, so liefert eine entsprechende Auswertung neue Informationen. Der RSSI hängt zum einen von der Entfernung zwischen Sender und Empfänger ab, sowie von der Dämpfung auf der Luftschnittstelle (hervorgerufen durch Objekte auf dem Übertragungsweg, unterschiedliche Ausbreitungsvoraussetzungen, etc.). Somit lässt sich bei bekannter Entfernung auf die Dämpfung auf der Luftschnittstelle schließen. Fig. 3 zeigt ein Diagramm einer Abhängigkeit zwischen RSSI und der Entfernung bei einem Freifeldmodell. Dabei ist auf der x-Achse die Distanz aufgetragen und auf der y-Achse der RSSI. Der Graph ergibt sich durch die Formel

$$20 \log\left(4 \cdot \pi \cdot \frac{d}{l}\right).$$

Im Folgenden werden im Rahmen von Ausführungsbeispielen Verfahren vorgestellt, welche diese Informationen generieren und nutzen. Dabei können Ausführungsbeispiele darauf basieren, dass ein Verhältnis zwischen der Empfangssignalstärke und den Distanz zwischen den Fahrzeugen (oder dem Fahrzeug und der Infrastruktur) ausgewertet wird.

In manchen Ausführungsbeispielen können dynamische Informationen genutzt werden. So kann beispielsweise eine Schätzung der Verkehrsdichte basierend darauf durchgeführt werden, dass zwischen Sender und Empfänger fahrende Fahrzeuge das Signal dämpfen und zu einem kleineren RSSI als bei freier Strecke führen. Auch kann eine Schätzung der Wetterbedingungen durchgeführt werden. Ebenso wie in der Schätzung der Verkehrsdichte kann auch Regen oder Nebel den RSSI verringern.

Zusätzlich oder alternativ zu den dynamischen Informationen können auch statische Informationen berechnet werden. So können beispielsweise Bebauungen oder Straßeneigenschaften erkannt werden. So beeinflussen beispielsweise enge Kurven oder Hügel den RSSI (sie verringern den RSSI). Ebenso können Tunnel, Brücken, Randbebauungen entlang der Straße den RSSI beeinflussen. Eine entsprechende Auswertung kann Informationen darüber, wie die Sende-/ Empfangseigenschaften am jeweiligen Standort sind, liefern. Durch diese Kenntnis wird es z.B. möglich bei Standorten mit schlechtem Empfang die eingehenden Informationen höherpriorisiert zu verarbeiten.

In manchen Ausführungsbeispielen können ferner die RSSI-Daten auf einen Server hochgeladen werden (etwa in Form der Information über die Mehrzahl von Fahrzeug-zu-Fahrzeug-Nachrichten). Um die obenstehenden Möglichkeiten zu verbessern, können die verorteten RSSI-Daten auf ein Backend hochgeladen und dort gesammelt werden. Durch eine ausreichende Anzahl von Fahrten unterschiedlicher Fahrzeuge zu unterschiedlichen Tageszeiten lässt sich eine Karte (etwa eine Heatmap, wörtliche Übersetzung "Hitzekarte") der Sendereichweiten aufbauen. Ein Fahrzeug kann mittels dieser Heatmap entscheiden, ob an machen stellen nicht auf die Direktkommunikation gesetzt werden sollte, da die Ausbreitung lokal sehr schlecht ist. Ebenso können die Sende-/ Empfangseigenschaften unterschiedlicher Fahrzeugtypen bestimmt und herausgerechnet werden.

In manchen Ausführungsbeispielen kann ferner ein Schutz der Übertragung (im Sinne von Sicherheit) erhöht werden. Ein Aspekt bei der Direktkommunikation ist der Schutz der Übertragung. Wenn Daten empfangen werden kann das Fahrzeug entscheiden, ob es dem Sender vertraut und die Daten verarbeitet werden. Dies wird bei pWLAN mit Zertifikaten und einer PKI (Public Key Infrastructure) gemacht (siehe Fig. 4). Wenn eine PKI genutzt wird, wird von einem Anwender 410 ein Antrag (1) an eine Registrierungsstelle RA (Registration Authority) 420 übermittelt. Diese übermittelt (3) eine Bestätigung an eine Zertifizierungsstelle CA (Certification Authority) 430. Die vertrauenswürdige Zertifizierungsstelle vergibt so etwa ein Zertifikat an ein Fahrzeug (3) (den Anwender 410). Das sendende Fahrzeug signiert die zu übertragenen Daten mit dem Zertifikat (4) und übermittelt die Daten an den Einsatzort 440. Am Einsatzort 440 wird die Signatur mit Hilfe einer Validierungsstelle VA (Validation Authority) 450 geprüft (5). Dazu werden die entsprechenden Informationen von der Zertifizierungsstelle 430 der Validierungsstelle 450 bereitgestellt (6). Das Ergebnis der Prüfung wird wiederum an den Einsatzort übermittelt (7). So kann der Empfänger überprüfen, ob die Daten mit dem vertrauenswürdigen Zertifikat signiert wurden (5,7).

Jedoch bietet dieses System auch keine hundertprozentige Sicherheit. Sollte ein Angreifer in Besitz eines Zertifikates kommen, kann dieser möglicherweise beliebige Nachrichten verschicken. So könnte ein Angreifer Informationen mit falschen Positionsangaben verschicken. Das empfangende Fahrzeug reagiert dann möglicherweise auf Ereignisse und Fahrzeuge, die gar nicht oder nicht an der angegebenen Position existieren. Solch ein Angriff könnte aber mit Hilfe der RSSI entdeckt und unterbunden werden (etwa mit Hilfe des Verhältnisses zwischen Empfangssignalstärke und Distanz). So kann ein Fahrzeug von diversen Fahrzeugen und/oder der Infrastruktur Daten empfangen. Anhand der Positionen und der RSSI-Daten kann das Fahrzeug die mittleren Ausbreitungseigenschaften bestimmen (etwa die Information über das zu erwartende Verhältnis zwischen der Empfangssignalstärke und der Distanz). Alternativ oder zusätzlich kann das Fahrzeug von einem Backend wie oben beschrieben eine Karte (etwa in Form einer Heatmap, Hitzekarte) über die Ausbreitungseigenschaften vor Ort empfangen. Das empfangene Fahrzeug kann nun die Position und RSSI eines Senders mit den mittleren Ausbreitungseigenschaften vergleichen. Weichen die realen Daten von dem Modell der mittleren Ausbreitungseigenschaften ab, kann dies als Indiz genommen werden, dass der Sender nicht wirklich in der Entfernung zum Empfänger ist, wie in den Positionsdaten angegeben.

Mehr Details und Aspekte von Ausführungsbeispielen werden in Verbindung mit dem Konzept oder Beispielen genannt, die vorher (z.B. Fig. 1a bis 2b) beschrieben wurden. Ausführungsbeispiele können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen. Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | |
|---|---|
| 10 | Vorrichtung für ein erstes Fahrzeug |
| 12 | Kommunikationsmodul |
| 14 | Kontrollmodul |
| 20 | Vorrichtung für einen Server |
| 22 | Schnittstelle |
| 24 | Kontrollmodul |
| 100 | Erstes Fahrzeug |
| 105 | zweites Fahrzeug |
| 110 | Empfangen einer Fahrzeug-zu-Fahrzeug-Nachricht |
| 120 | Bestimmen einer Distanz |
| 130 | Bestimmen einer Empfangssignalstärke |
| 140 | Bestimmen einer Information über ein Verhältnis zwischen der Empfangssignalstärke und der Distanz |
| 150 | Verifizieren einer Positionsinformation |
| 152 | Bestimmen einer Information über ein zu erwartendes Verhältnis |
| 154 | Empfangen einer Information über ein zu erwartendes Verhältnis |
| 160 | Verwerfen der Fahrzeug-zu-Fahrzeug-Nachricht |
| 170 | Kommunizieren mit ein oder mehreren weiteren Fahrzeugen |
| 172 | Anpassen einer Sendesignalstärke |
| 174 | Anpassen einer Empfangspriorisierung |
| 180 | Bereitstellen einer Information über die empfangene Fahrzeug-zu-Fahrzeug-Nachricht |
| 190 | Schätzen einer Information über ein aktuelles Wetter |
| 195 | Schätzen einer Information über eine Verkehrsdichte |
| 200 | Server |
| 210 | Empfangen von Information über eine Mehrzahl von empfangenen Fahrzeug-zu-Fahrzeug-Nachrichten |
| 220 | Berechnen einer Karte |
| 230 | Bereitstellen der Karte |
| 410 | Anwender |
| 420 | Registrierungsstelle |
| 430 | Zertifizierungsstelle |
| 440 | Einsatzort |
| 450 | Validierungsstelle |

**Patentansprüche**

1. Verfahren für ein erstes Fahrzeug (100), das Verfahren umfassend:

   Empfangen (110) einer Fahrzeug-zu-Fahrzeug-Nachricht direkt von einem zweiten Fahrzeug (105), wobei die Fahrzeug-zu-Fahrzeug-Nachricht eine Positionsinformation über das zweite Fahrzeug umfasst;
   Bestimmen (120) einer Distanz zwischen dem ersten Fahrzeug und dem zweiten Fahrzeug basierend auf einem Inhalt der Fahrzeug-zu-Fahrzeug-Nachricht;
   Bestimmen (130) einer Empfangssignalstärke der Fahrzeug-zu-Fahrzeug-Nachricht;
   Bestimmen (140) einer Information über ein Verhältnis zwischen der Empfangssignalstärke und der Distanz;
   Empfangen (154) einer Information über ein zu erwartendes Verhältnis zwischen der Empfangssignalstärke der Fahrzeug-zu-Fahrzeug-Nachricht und der Distanz zwischen dem ersten Fahrzeug und dem zweiten Fahrzeug als Teil einer Karte mit Information über ein zu erwartendes Verhältnis aus Empfangssignalstärken und Distanzen für eine Mehrzahl von Positionen und/oder Distanzen in einem geographischen Koordinatensystem von einem Server (200); und

Verifizieren (150) der Positionsinformation basierend auf der Information über das Verhältnis zwischen der Empfangssignalstärke und der Distanz, basierend auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug.

2. Das Verfahren gemäß Anspruch 1, wobei das Verfahren ein Bestimmen (152) einer Information über ein zu erwartendes Verhältnis zwischen der Empfangssignalstärke der Fahrzeug-zu-Fahrzeug-Nachricht und der Distanz zwischen dem ersten Fahrzeug und zweiten Fahrzeug basierend auf einer Mehrzahl von Fahrzeug-zu-Fahrzeug-Nachrichten von einer Mehrzahl von weiteren Fahrzeugen umfasst, wobei das Verifizieren (150) der Positionsinformation auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug basiert.

3. Das Verfahren gemäß einem der Ansprüche 1 oder 2, wobei die Fahrzeug-zu-Fahrzeug-Nachricht durch eine kryptographische Signatur gesichert ist, wobei die kryptographische Signatur der Fahrzeug-zu-Fahrzeug-Nachricht dazu ausgelegt ist, um eine Identität eines Senders der Fahrzeug-zu-Fahrzeug-Nachricht zu bestätigen, wobei das Verifizieren (150) der Positionsinformation als zweiter Faktor in der Bestätigung der Identität des Senders der Fahrzeug-zu-Fahrzeug-Nachricht genutzt wird.

4. Das Verfahren gemäß einem der Ansprüche 1 bis 3, umfassend Verwerfen (160) der Fahrzeug-zu-Fahrzeug-Nachricht falls die Verifikation der Position fehlschlägt.

5. Das Verfahren gemäß einem der Ansprüche 1 bis 4, ferner umfassend Bereitstellen (180) einer Information über die empfangene Fahrzeug-zu-Fahrzeug-Nachricht für einen Server (200), wobei die Information über die empfangene Fahrzeug-zu-Fahrzeug-Nachricht Information über eine Position des ersten Fahrzeugs, Information über eine Position des zweiten Fahrzeugs und eine Information über die Empfangssignalstärke umfasst.

6. Ein Verfahren für einen Server (200), das Verfahren umfassend:

Empfangen (210) von Information über eine Mehrzahl von empfangenen Fahrzeug-zu-Fahrzeug-Nachrichten, wobei die Information über die Mehrzahl von empfangenen Fahrzeug-zu-Fahrzeug-Nachrichten für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht umfasst;

Berechnen (220) einer Karte mit Information über ein zu erwartendes Verhältnis aus Empfangssignalstärken und Distanzen für eine Mehrzahl von Positionen und/oder Distanzen basierend auf der Information über die Mehrzahl von empfangenen Fahrzeug-zu-Fahrzeug-Nachrichten; und

Bereitstellen (230) der Karte mit der Information über ein zu erwartendes Verhältnis aus Empfangssignalstärken und Distanzen für eine Mehrzahl von Positionen und/oder Distanzen in einem geographischen Koordinatensystem für ein oder mehrere Fahrzeuge.

7. Programm mit einem Programmcode zum Durchführen eines der Verfahren gemäß einem der vorhergehenden Ansprüche, wenn der Programmcode auf einem Computer, einem Prozessor, einem Kontrollmodul oder einer programmierbaren Hardwarekomponente ausgeführt wird.

8. Eine Vorrichtung (10) für ein erstes Fahrzeug (100), die Vorrichtung umfassend:

ein Kommunikationsmodul (12) für eine Fahrzeug-zu-Fahrzeugkommunikation mit weiteren Fahrzeugen; und
ein Kontrollmodul (14) ausgebildet zum:

Empfangen einer Fahrzeug-zu-Fahrzeug-Nachricht direkt von einem zweiten Fahrzeug (105) über das Kommunikationsmodul, wobei die Fahrzeug-zu-Fahrzeug-Nachricht eine Positionsinformation über das zweite Fahrzeug umfasst;
Bestimmen einer Distanz zwischen dem ersten Fahrzeug und dem zweiten Fahrzeug basierend auf einem Inhalt der Fahrzeug-zu-Fahrzeug-Nachricht;
Bestimmen einer Empfangssignalstärke der Fahrzeug-zu-Fahrzeug-Nachricht;
Bestimmen einer Information über ein Verhältnis zwischen der Empfangssignalstärke und der Distanz;
Empfangen einer Information über ein zu erwartendes Verhältnis zwischen der Empfangssignalstärke der Fahrzeug-zu-Fahrzeug-Nachricht und der Distanz zwischen dem ersten Fahrzeug und dem zweiten Fahrzeug als Teil einer Karte mit Information über ein zu erwartendes Verhältnis aus Empfangssignalstärken und Distanzen für eine Mehrzahl von Positionen und/oder Distanzen in einem geographischen Koordinatensystem von einem Server (200), und

Verifizieren der Positionsinformation basierend auf der Information über das Verhältnis zwischen der Empfangssignalstärke und der Distanz, basierend auf der Information über das zu erwartende Verhältnis zwischen der Empfangssignalstärke der Fahrzeug-zu-Fahrzeug-Nachricht und der Distanz zwischen dem ersten Fahrzeug und zweiten Fahrzeug.

9. Eine Vorrichtung (20) für einen Server (200), die Vorrichtung umfassend:

eine Schnittstelle (22) zum Kommunizieren mit ein oder mehreren Fahrzeugen; und
ein Kontrollmodul (24), ausgebildet zum:

Empfangen von Information über eine Mehrzahl von empfangenen Fahrzeug-zu-Fahrzeug-Nachrichten über die Schnittstelle (22), wobei die Information über die Mehrzahl von empfangenen Fahrzeug-zu-Fahrzeug-Nachrichten für jede Fahrzeug-zu-Fahrzeug-Nachricht der Mehrzahl von Fahrzeug-zu-Fahrzeug-Nachrichten eine Information über eine Position eines Empfänger-Fahrzeugs, eine Information über eine Position eines Sender-Fahrzeugs und eine Information über eine Empfangssignalstärke der Fahrzeug-zu-Fahrzeug-Nachricht umfasst,
Berechnen einer Karte mit Information über ein zu erwartendes Verhältnis aus Empfangssignalstärken und Distanzen für eine Mehrzahl von Positionen und/oder Distanzen basierend auf der Information über die Mehrzahl von empfangenen Fahrzeug-zu-Fahrzeug-Nach richten,
Bereitstellen der Karte mit der Information über ein zu erwartendes Verhältnis aus Empfangssignalstärken und Distanzen für eine Mehrzahl von Positionen und/oder Distanzen in einem geograpischen Koordinatensystem für ein oder mehrere Fahrzeuge über die Schnittstelle

## Claims

1. Method for a first vehicle (100), the method comprising:

Receiving (110) a vehicle-to-vehicle message directly from a second vehicle (105), wherein the vehicle-to-vehicle message comprises positional information about the second vehicle;
Determining (120) a distance between the first vehicle and the second vehicle based upon a content of the vehicle-to-vehicle message; determining (130) a received signal strength of the vehicle-to-vehicle message; determining (140) information about a ratio between the received signal strength and the distance;
Receiving (154) information about an expected ratio between the received signal strength of the vehicle-to-vehicle message and the distance between the first vehicle and the second vehicle as part of a map with information about an expected ratio of received signal strengths and distances for a plurality of positions and/or distances in a geographical coordinate system from a server (200); and
Verifying (150) the position information based upon the information about the ratio between the received signal strength and the distance, based upon the information about the expected ratio between the received signal strength of the vehicle-to-vehicle message and the distance between the first vehicle and the second vehicle.

2. Method according to claim 1, wherein the method comprises determining (152) information about an expected ratio between the received signal strength ratio of the vehicle-to-vehicle message and the distance between the first vehicle and the second vehicle based upon a plurality of vehicle-to-vehicle messages from a plurality of further vehicles, wherein verifying (150) the position information is based upon the information about the expected ratio between the received signal strength of the vehicle-to-vehicle message and the distance between the first vehicle and the second vehicle.

3. Method according to one of claims 1 or 2, wherein the vehicle-to-vehicle message is protected by a cryptographic signature, wherein the cryptographic signature of the vehicle-to-vehicle message is configured to confirm an identity of a transmitter of the vehicle-to-vehicle message, wherein verifying (150) the position information is used as a second factor in confirming the identity of the transmitter of the vehicle-to-vehicle message.

4. Method according to one of claims 1 through 3, comprising discarding (160) the vehicle-to-vehicle message if verification of the position fails.

5. Method according to one of claims 1 through 4, further comprising providing (180) information about the received vehicle-to-vehicle message for a server (200), wherein the information about the received vehicle-to-vehicle message comprises information about a position of the first vehicle, information about a position of the second vehicle, and information about the received signal strength.

6. Method for a server (200), the method comprising:

Receiving (210) information about a plurality of received vehicle-to-vehicle messages, wherein the information about the plurality of received vehicle-to-vehicle messages, for each vehicle-to-vehicle message of the plurality of vehicle-to-vehicle messages, comprises information about a position of a receiver vehicle, information about a position of a transmitter vehicle, and information about a received signal strength of the vehicle-to-vehicle message;
Computing (220) a map with information about an expected ratio of received signal strengths and distances for a plurality of positions and/or distances, based upon the information about the plurality of received vehicle-to-vehicle messages; and
Providing (230) the map with the information about an expected ratio of received signal strengths and distances for a plurality of positions and/or distances in a geographical coordinate system for one or more vehicles.

7. Program having a program code for implementing the method according to one of the preceding claims if the program code is executed on a computer, a processor, a control module, or a programmable hardware component.

8. Device (10) for a first vehicle (100), the device comprising:

a communications module (12) for vehicle-to-vehicle communication with further vehicles; and
a control module (14) designed for:

Receiving a vehicle-to-vehicle message directly from a second vehicle (105) via the communications module, wherein the vehicle-to-vehicle message comprises position information about the second vehicle;
Determining a distance between the first vehicle and the second vehicle based upon a content of the vehicle-to-vehicle message;
Determining a received signal strength of the vehicle-to-vehicle message; determining information about a ratio between the received signal strength and the distance;
Receiving information about an expected ratio between the received signal strength of the vehicle-to-vehicle message and the distance between the first vehicle and the second vehicle as part of a map with information about an expected ratio of received signal strengths and distances for a plurality of positions and/or distances in a geographical coordinate system from a server (200); and
Verifying the position information based upon the information about the ratio between the received signal strength and the distance, based upon the information about the expected ratio between the received signal strength of the vehicle-to-vehicle message and the distance between the first vehicle and the second vehicle.

9. Device (20) for a server (200), the device comprising:

an interface (22) for communicating with one or more vehicles; and a control module (24) configured for:

Receiving information about a plurality of received vehicle-to-vehicle messages via the interface (22), wherein the information about the plurality of received vehicle-to-vehicle messages, for each vehicle-to-vehicle message of the plurality of vehicle-to-vehicle messages, comprises information about a position of a receiver vehicle, information about a position of a transmitter vehicle, and information about a received signal strength of the vehicle-to-vehicle message;
Computing a map with information about an expected ratio of received signal strengths and distances for a plurality of positions and/or distances, based upon the information about the plurality of received vehicle-to-vehicle messages; and
Providing the map with the information about an expected ratio of received signal strengths and distances for a plurality of positions and/or distances in a geographical coordinate system for one or more vehicles via the interface.

**Revendications**

1. Procédé pour un premier véhicule (100), le procédé comprenant :

la réception (110) d'un message de véhicule à véhicule directement en provenance d'un deuxième véhicule (105), dans lequel le message de véhicule à véhicule comprend une information de position concernant le deuxième véhicule ;

la détermination (120) d'une distance entre le premier véhicule et le deuxième véhicule sur la base d'un contenu du message de véhicule à véhicule ; la détermination (130) d'une intensité de signal de réception du message de véhicule à véhicule ; la détermination (140) d'une information concernant un comportement entre l'intensité de signal de réception et la distance ;

la réception (154) d'une information concernant un comportement attendu entre l'intensité de signal de réception du message de véhicule à véhicule et la distance entre le premier véhicule et le deuxième véhicule sous forme de partie d'une carte avec une information concernant un comportement attendu à partir des intensités de signal de réception et des distances pour une pluralité de positions et/ou de distances dans un système de coordonnées géographiques en provenance d'un serveur (200) ; et

la vérification (150) de l'information de position sur la base de l'information concernant le comportement entre l'intensité de signal de réception et la distance, sur la base de l'information concernant le comportement attendu entre l'intensité de signal de réception du message de véhicule à véhicule et la distance entre le premier véhicule et le deuxième véhicule.

2. Procédé selon la revendication 1, dans lequel le procédé comprend une détermination (152) d'une information concernant un comportement attendu entre l'intensité de signal de réception du message de véhicule à véhicule et la distance entre le premier véhicule et le deuxième véhicule sur la base d'une pluralité de messages de véhicule à véhicule provenant d'une pluralité d'autres véhicules, dans lequel la vérification (150) de l'information de position est basée sur l'information concernant le comportement attendu entre l'intensité de signal de réception du message de véhicule à véhicule et la distance entre le premier véhicule et le deuxième véhicule.

3. Procédé selon l'une quelconque des revendications 1 ou 2, dans lequel le message de véhicule à véhicule est sécurisé par une signature cryptographique, dans lequel la signature cryptographique du message de véhicule à véhicule est conçu pour confirmer une identité de l'expéditeur du message de véhicule à véhicule, dans lequel la vérification (150) de l'information de position sert de deuxième facteur dans la confirmation de l'identité de l'expéditeur du message de véhicule à véhicule.

4. Procédé selon l'une quelconque des revendications 1 à 3, comprenant le rejet (160) du message de véhicule à véhicule au cas où la vérification de la position échoue.

5. Procédé selon l'une quelconque des revendications 1 à 4, comprenant en outre la mise à disposition (180) d'une information concernant le message de véhicule à véhicule reçu pour un serveur (200), dans lequel l'information concernant le message de véhicule à véhicule reçu comprend une information concernant une position du premier véhicule, une information concernant une position du deuxième véhicule et une information concernant l'intensité de signal de réception.

6. Procédé pour un serveur (200), le procédé comprenant :

la réception (210) d'une information concernant une pluralité de messages de véhicule à véhicule reçus, dans lequel l'information concernant la pluralité de messages de véhicule à véhicule reçus comprend pour chaque message de véhicule à véhicule de la pluralité de messages de véhicule à véhicule, une information concernant une position d'un véhicule récepteur, une information concernant une position d'un véhicule expéditeur et une information concernant une intensité de signal de réception du message de véhicule à véhicule ;

le calcul (220) d'une carte avec une information concernant un comportement attendu à partir des intensités de signal de réception et des distances pour une pluralité de positions et/ou de distances sur la base de l'information concernant la pluralité de messages de véhicule à véhicule reçus ; et

la mise à disposition (230) de la carte avec l'information concernant un comportement attendu à partir des intensités de signal de réception et des distances pour une pluralité de positions et/ou de distances dans un système de coordonnées géographiques pour un ou plusieurs véhicules.

7. Programme comprenant un code de programme permettant de mettre en oeuvre un des procédés selon l'une quelconque des revendications précédentes, lorsque le code de programme est exécuté sur un ordinateur, un processeur, un module de commande ou un composant matériel programmable.

8. Dispositif (10) pour un premier véhicule (100), le dispositif comprenant un module de communication (12) pour une communication de véhicule à véhicule avec d'autres véhicules ; et
un module de commande (14) conçu pour :

la réception d'un message de véhicule à véhicule directement en provenance d'un deuxième véhicule (105) par le biais du module de communication, dans lequel le message de véhicule à véhicule comprend une information de position concernant le deuxième véhicule ;
la détermination d'une distance entre le premier véhicule et le deuxième véhicule sur la base d'un contenu du message de véhicule à véhicule ;
la détermination d'une intensité de signal de réception du message de véhicule à véhicule ; la détermination d'une information concernant un comportement entre l'intensité de signal de réception et la distance ;
la réception d'une information concernant un comportement attendu entre l'intensité de signal de réception du message de véhicule à véhicule et la distance entre le premier véhicule et le deuxième véhicule sous forme de partie d'une carte avec une information concernant un comportement attendu à partir des intensités de signal de réception et des distances pour une pluralité de positions et/ou de distances dans un système de coordonnées géographiques en provenance d'un serveur (200) et
la vérification de l'information de position sur la base de l'information concernant le comportement entre l'intensité de signal de réception et la distance, sur la base de l'information concernant le comportement attendu entre l'intensité de signal de réception du message de véhicule à véhicule et la distance entre le premier véhicule et le deuxième véhicule.

9. Dispositif (20) pour un serveur (200), le dispositif comprenant :
une interface (22) pour communiquer avec un ou plusieurs véhicule ; et un module de commande (24), conçu pour :

la réception d'une information concernant une pluralité de messages de véhicule à véhicule reçus par le biais de l'interface (22), dans lequel l'information concernant la pluralité de messages de véhicule à véhicule reçus comprend pour chaque message de véhicule à véhicule de la pluralité de messages de véhicule à véhicule, une information concernant une position d'un véhicule récepteur, une information concernant une position d'un véhicule expéditeur et une information concernant une intensité de signal de réception du message de véhicule à véhicule,
le calcul d'une carte avec une information concernant un comportement attendu à partir des intensités de signal de réception et des distances pour une pluralité de positions et/ou de distances sur la base de l'information concernant la pluralité de messages de véhicule à véhicule reçus,
la mise à disposition de la carte avec l'information concernant un comportement attendu à partir des intensités de signal de réception et des distances pour une pluralité de positions et/ou de distances dans un système de coordonnées géographiques pour un ou plusieurs véhicules par le biais de l'interface.

EMPFANGEN EINER
FAHRZEUG-ZU-FAHRZEUG-NACHRICHT

110

BESTIMMEN EINER DISTANZ

120

BESTIMMEN EINER
EMPFANGSSIGNALSTÄRKE

130

BESTIMMEN EINER INFORMATION ÜBER
EIN VERHÄLTNIS ZWISCHEN DER
EMPFANGSSIGNALSTÄRKE UND DER DISTANZ

140

VERIFIZIEREN EINER POSITIONSINFORMATION

150

Fig. 1a

EMPFANGEN EINER
FAHRZEUG-ZU-FAHRZEUG-NACHRICHT
— 110

BESTIMMEN EINER DISTANZ
— 120

BESTIMMEN EINER
EMPFANGSSIGNALSTÄRKE
— 130

BESTIMMEN EINER INFORMATION ÜBER
EIN VERHÄLTNIS ZWISCHEN DER
EMPFANGSSIGNALSTÄRKE UND DER DISTANZ
— 140

VERIFIZIEREN EINER POSITIONSINFORMATION
— 150

BESTIMMEN EINER INFORMATION ÜBER
EIN ZU ERWARTENDES VERHÄLTNIS
— 152

EMPFANGEN EINER INFORMATION ÜBER
EIN ZU ERWARTENDES VERHÄLTNIS
— 154

VERWERFEN DER
FAHRZEUG-ZU-FAHRZEUG-NACHRICHT
— 160

KOMMUNIZIEREN MIT EIN ODER MEHREREN
WEITEREN FAHRZEUGEN
— 170

ANPASSEN EINER SENDESIGNALSTÄRKE
— 172

ANPASSEN EINER EMPFANGSPRIORISIERUNG
— 174

BEREITSTELLEN EINER INFORMATION ÜBER DIE
EMPFANGENE FAHRZEUG-ZU-FAHRZEUG-NACHRICHT
— 180

SCHÄTZEN EINER INFORMATION
ÜBER EIN AKTUELLES WETTER
— 190

SCHÄTZEN EINER INFORMATION
ÜBER EINE VERKEHRSSITUATION
— 195

Fig. 1b

FAHRZEUG-ZU-
FAHRZEUG-
NACHRICHT

INFORMATION ÜBER
FAHRZEUG-ZU-
FAHRZEUG-
NACHRICHT

ERSTES FAHRZEUG

KOMMUNIKATIONS-
MODUL

12

KONTROLLMODUL

14

10

100

ZWEITES
FAHRZEUG

105

SERVER

200

## Fig. 1c

EMPFANGEN VON INFORMATION ÜBER
EINE MEHRZAHL VON FAHRZEUG-
ZU-FAHRZEUG-NACHRICHTEN

210

BERECHNEN EINER KARTE

220

BEREITSTELLEN DER KARTE

230

## Fig. 2a

INFORMATION ÜBER
FAHRZEUG-ZU-FAHRZEUG-NACHRICHT

SERVER

SCHNITTSTELLE

22

KONTROLLMODUL

24

20

200

FAHRZEUG

100

## Fig. 2b

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016205143 A1
- CN 106851544 A
- US 2017365171 A1

**In der Beschreibung aufgeführte Nicht-Patentliteratur**

- **BIN XIAO et al.** *Detection and localization of sybil nodes in VANETS,* 2006